Europäisches Patentamt

European Patent Office

Office européen des brevets

(19)

(11) Numéro de publication: **0 144 258**

**A1**

(12) # DEMANDE DE BREVET EUROPEEN

(21) Numéro de dépôt: 84402198.0

(22) Date de dépôt: 31.10.84

(51) Int. Cl.⁴: **G 06 F 1/00**

(30) Priorité: 02.11.83 FR 8317402

(43) Date de publication de la demande:
12.06.85 Bulletin 85/24

(84) Etats contractants désignés:
AT BE CH DE GB IT LI LU NL SE

(71) Demandeur: TRANSRACK
20-22 Avenue Raspail
F-94100 Saint Maur(FR)

(71) Demandeur: CORISANA SARL
No. 62 Cité Lavancia
F-01590 Dortan(FR)

(72) Inventeur: Meggs, Jean-Pierre
58, rue Roger Salengro
F-93140 Bondy(FR)

(72) Inventeur: Rudler, Daniel
Rue des Sports Lavancia
F-01590 Dortan(FR)

(74) Mandataire: CABINET BONNET-THIRION
95 Boulevard Beaumarchais
F-75003 Paris(FR)

(54) **Console de visualisation.**

(57) L'invention concerne une console de visualisation du genre comportant un capotage de protection pour la réception d'un tube cathodique et de ses accessoires, et un socle par rapport auquel est monté ce capotage.

Selon l'invention le capotage de protection (22, 23) est relié au socle (12) par l'intermédiaire d'un élément de support (15) équipé de moyens de fixation (120, 110) pour le tube cathodique (10) et de moyens (40, 43, 47) pour porter ses équipements. L'élément de support est avantageusement muni d'un sabot (17) formant articulation avec un réceptacle du socle.

Application notamment à la vidéo, l'informatique, le traitement de texte.

./...

Croydon Printing Company Ltd.

FIG.3

1

"Console de visualisation"    **0144258**

La présente invention concerne une console de visualisation, telle qu'on en utilise pour l'affichage de données sur un écran ou tube cathodique, notamment en vidéoscopie, en informatique, en bureautique, ou pour le traitement de textes. Elle vise plus particulièrement le montage, voire l'orientation, du tube cathodique par rapport à un élément formant socle.

Ainsi qu'on le sait, une console de visualisation comprend un ensemble de pièces judicieusement conçues et assemblées de manière à former un boîtier ou capotage destiné à recevoir un tube cathodique et ses éléments de fonction périphérique. La présence de ce capotage est requise par les diverses normes de sécurité en vigueur, tant pour la protection des équipements internes de la console, que pour la protection des personnes contre tout risque d'électrocution.

Dans les consoles de visualisation connues à ce jour, c'est par l'intermédiaire de ce capotage de protection que sont assuré le montage et le soutien du tube cathodique et des équipements associés par rapport à un élément formant socle. Cette configuration présente l'inconvénient d'être peu pratique, car pendant les opérations de montage du tube et de ses accessoires l'intérieur de la console n'est généralement accessible que par la face arrière du capotage, ce qui peut se révéler très contraignant. D'autre part, la face avant de la console étant occupée par le tube cathodique, il n'est pas possible d'y disposer d'autres accessoires, tels que circuits imprimés ettransformateurs, notamment. Ces accessoires indispensables doivent alors être fixés par l'utilisateur dans l' espace libre subsistant à l'intérieur du capot, ce qui nécessite de sa part des opérations mécaniques, notamment de perçage, pour la mise en oeuvre d'ensembles vis-écrou de fixation.

La présente invention vise à pallier ces inconvénients grâce à une dissociation aussi complète que possible du capotage de protection vis-à-vis d'un élément de support pour la fixation du tube cathodique par rapport à un socle. L'invention vise en outre un dispositif simple pour l'orientation de cet élément de support vis-à-vis du socle.

L'invention propose à cet effet une console de visualisation du genre comportant un capotage de protection pour la réception d'un tube cathodique et de ses accessoires, et un socle par rapport auquel est monté ce capotage par l'intermédiaire d'un élément de support, caractérisé en ce que cet élément de support comporte un cadre adapté à ceinturer le tube cathodique le long de sa partie renflée, ce cadre étant équipé de moyens de fixation pour le tube cathodique et de moyens pour porter des équipements de ce tube.

Une telle configuration présente l'avantage d'offrir une accessibilité quasi-totale au tube cathodique, notamment à sa partie arrière avec ses connexions électriques, ainsi qu'à ses accessoires de fonction.

Le cadre formant ceinture étant généralement vertical, est adapté à maintenir le tube cathodique, dont l'axe est généralement sensiblement horizontal, à la périphérie de sa partie écran. Ce cadre est avantageusement pourvu sur son pourtour de lumières permettant la fixation par clippage d'un ou de plusieurs cadres de montage, de préférence en matière moulée, ou la fixation par vis et contreplaques de barrettes métalliques, en vue d'un montage aisé d'accessoires tels que circuits imprimés ou transformateurs en plaques.

Dans sa forme préférée de réalisation le cadre vertical formant ceinture comporte des rainures avant et arrière permettant un montage par clippage d'une bonnette d'habillage avant et d'un capot arrière, respectivement, formant conjointement capotage de protection.

Le cadre vertical, la bonnette et le capot arrière sont de préférence réalisés par moulage, en matière plastique, voire en alliage d'aluminium ou de zinc pour le cadre vertical.

Selon une caractéristique particulièrement avantageuse de l'invention l'élément de support du tube cathodique et du capotage de protection présente un sabot en forme de calotte sphérique adapté à coopérer, un peu à la manière d'une rotule, avec une cavité sphérique complémentaire solidaire du socle. Dans un mode préféré de réalisation la cavité sphérique du socle est traversée, avec possibilité de débattement angulaire, par une vis creuse à tête épaulée, fixe en rotation par rapport à l'élément de support, mais mobile le long de sa calotte sphérique à la faveur d'une lumière oblongue ménagée au travers de celle-ci.

D'autres objets, caractéristiques et avantages de l'invention ressortent de la description qui suit, donnée à titre d'exemple illustratif mais non limitatif, en regard des dessins annexés sur lesquels :

la figure 1 est une vue en perspective d'une console de visualisation conforme à l'invention, équipée d'un tube cathodique ;

la figure 2 est une vue en coupe verticale selon le plan II-II de la figure 1, le tube cathodique étant représenté en traits mixtes ;

la figure 3 illustre en perspective éclatée les principaux éléments constitutifs de la console ;

la figure 4 est une vue en coupe partielle au niveau de la liaison capotage-socle selon la ligne IV-IV de la figure 2;

la figure 5 est une vue en coupe du cadre de support selon la ligne V-V de la figure 3, la bonnette étant représentée partiellement en traits mixtes, en configuration d'assemblage;

la figure 6 est une vue en coupe selon la ligne VI-VI de la figure 3, le capot arrière étant représenté partiellement en traits mixtes en configuration d'assemblage ;

la figure 7 est une vue en coupe analogue aux deux précédentes, selon la ligne VII-VII de la figure 3, un cadre de montage de cartes imprimées étant représenté partiellement, en traits mixtes, en configuration d'assemblage ;

la figure 8 montre à plus grande échelle l'angle supérieur droit du cadre de support, bonnette enlevée, équipé d'un dispositif de calage du tube, selon la flèche VIII de la figure 3 ;

la figure 9 est une vue en coupe selon la ligne IX-IX de la figure 8 ;

la figure 10 est une vue à grande échelle de l'angle inférieur droit du cadre de support équipé d'un autre dispositif de calage du tube, selon la flèche X de la figure 3 ;

la figure 11 est une vue en coupe selon la ligne brisée XI-XI de la figure 10 ;

les figures 12 et 13 montrent de façon schématique la console en plan avec des orientations transversales opposées;

les figures 14 et 15 montrent en élévation de côté la console inclinée respectivement vers le haut et vers le bas.

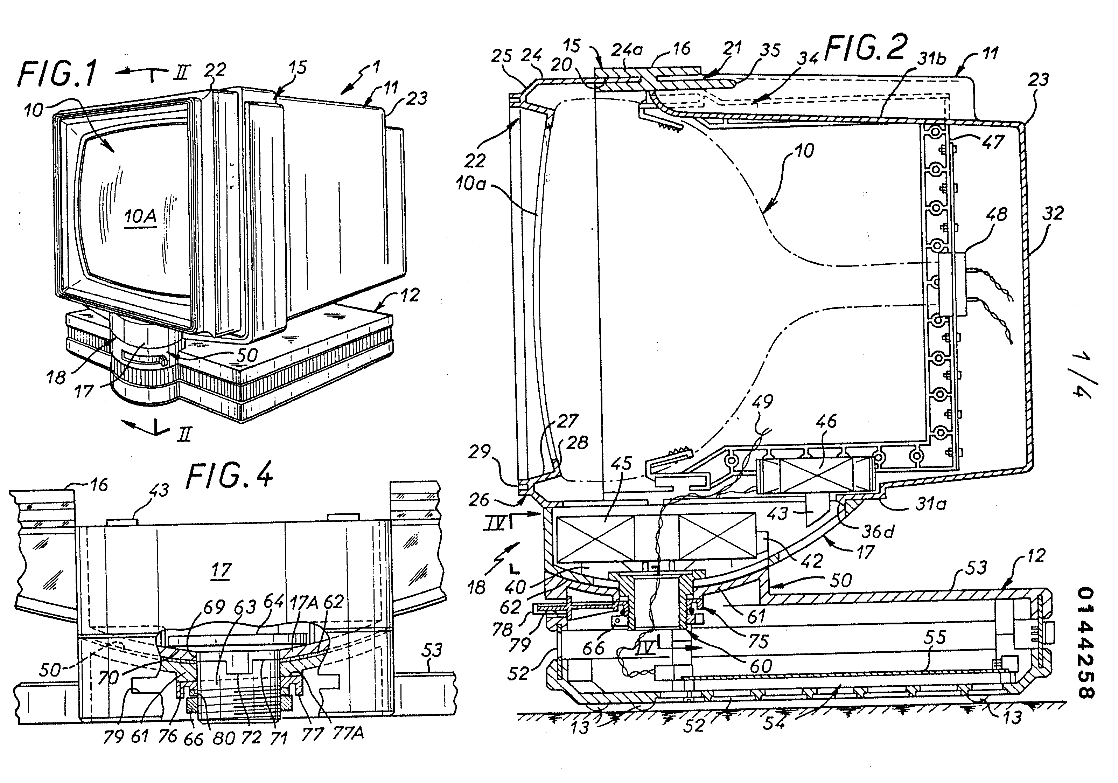

La console de visualisation représentée à titre d'exemple aux figures 1 à 15 sous la référence 1 comporte, de manière connue en soi, un capotage de protection 11 équipé d'un tube cathodique 10 et un socle 12 par rapport auquel le capotage 11 est fixé en position et en orientation. Telle que représentée, la console de visualisation 1 est amovible et portable et son socle est muni de patins 13 pour son appui sur une table ou sur un bureau.

Selon l'invention le tube cathodique 10 et le capotage de protection 11 sont reliés au socle 12 par l'intermédiaire d'un élément de support 15 auquel ils sont reliés indépendamment l'un de l'autre. Tel que représenté dans les figures l'élément de support 15 est formé d'un cadre 16, adapté à ceinturer le tube cathodique le long de la périphérie de son écran 10a, dans un plan perpendiculaire à l'axe de ce dernier, et d'un sabot 17 de liaison avec le socle 12. Le cadre 16 est sensiblement vertical dans la mesure où l'axe du tube cathodique ne s'éloigne guère de l'horizontale en général.

Le cadre vertical 16 formant ceinture comporte dans l'épaisseur de sa tranche une rainure avant 20 et une rainure arrière 21 adaptée à recevoir pour fixation une bonnette d'habillage 22 et un capot arrière 23, respectivement. La conformation de ces rainures sera détaillée plus loin en regard des figures 5 à 11.

Ainsi qu'il est représenté aux figures 1 à 3 la bonnette d'habillage 22, de façon classique, ne laisse apparaître que la surface utile de l'écran 10a (représenté en traits mixtes) comme le reste du tube 10. Sa configuration est telle que, pour une dimension extérieure donnée, elle puisse s'adapter à différentes dimensions de tubes cathodiques.

La bonnette d'habillage 22 représentée aux figures 1 à 3 comporte essentiellement une paroi sensiblement rectangulaire 24 adaptée à s'engager par une de ses tranches 24a dans la rainure avant 20 du cadre vertical 16, sauf en regard du sabot 17 dont elle épouse le contour à la faveur d'une échancrure 24b. Cette paroi 24 se raccorde à une surface sensiblement pyramidale 25 se raccordant elle-même à une nervure sensiblement rectangulaire 26 dirigée vers l'utilisateur prolongée par une seconde surface sensiblement pyramidale 27 dirigée vers l'écran et terminée par une bande d'épaulement 28 destinée à venir en appui sur la périphérie de l'écran du tube cathodique. De manière classique la nervure rectangulaire 26 comporte une rainure 29 de réception d'un jonc de décoration.

La bonnette d'habillage 22 comporte, ménagée dans sa paroi sensiblement rectangulaire 24 de plus grande dimension et répartie le long de sa tranche 24a, plusieurs pattes de fixation par clippage 30 dont le montage sur le support 15 sera décrit plus loin. Dans l'exemple représenté ces pattes 30 sont au nombre de quatre désignées par les signes 30a à 30d.

Le capot arrière 23 est une boîte ouverte sur une face, dont la profondeur est choisie en fonction de la longueur du tube cathodique. Il comporte essentiellement une paroi latérale 31 et un fond 32. La face inférieure 31a de la paroi latérale 31 comporte une échancrure 33 adaptée à épouser le contour du sabot 17, tandis que la face supérieure correspondante 31b présente avantageusement une zone en dépression 34 adaptée à ménager, pour le transport de la console, une prise sur une languette 35 formant poignée en saillie à l'arrière du cadre vertical.

De même que la bonnette 22, le capot arrière 23 comporte, ménagée dans sa paroi latérale 31, une pluralité de pattes de fixation par clippage 36, cinq dans l'exemple représenté, sous les références 36a à 36e, la patte 36c étant toutefois cachée.

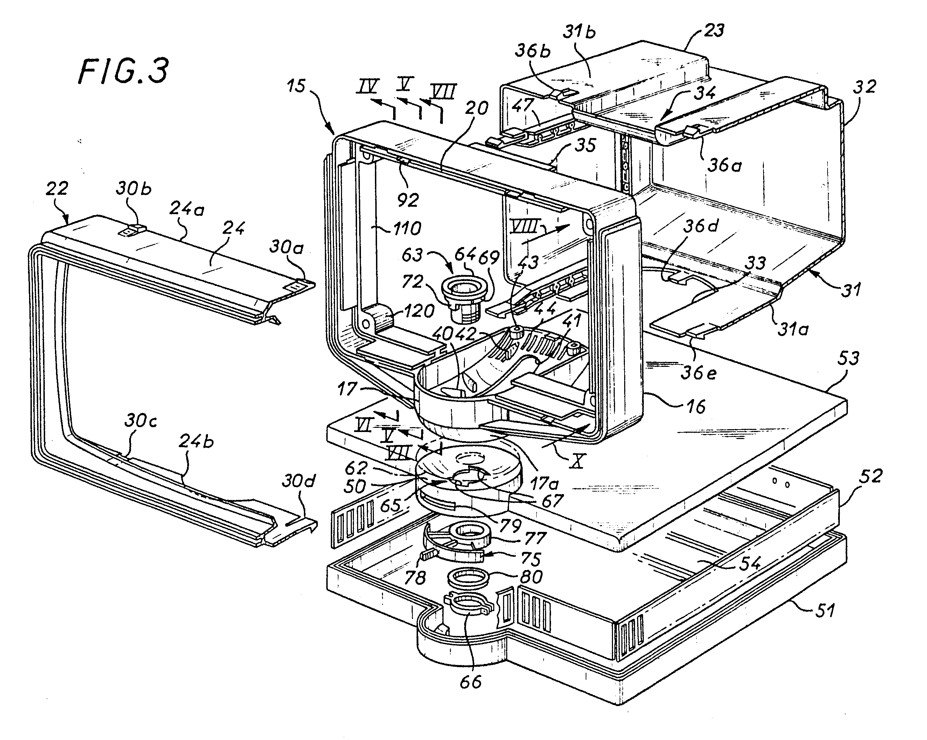

Le sabot de fixation 17 du support 15, ménagé au milieu du côté inférieur du cadre vertical 16, est un organe creux qui permet la disposition d'accessoires sous le tube cathodique. Tel que représenté sur la figure 3, ce sabot comporte à cet effet des languettes de support 40 de part et d'autre d'une lumière oblongue 41, des languettes de positionnement 42 et des plots de fixation 43. Des fentes de ventilation 44 y sont en outre ménagées.

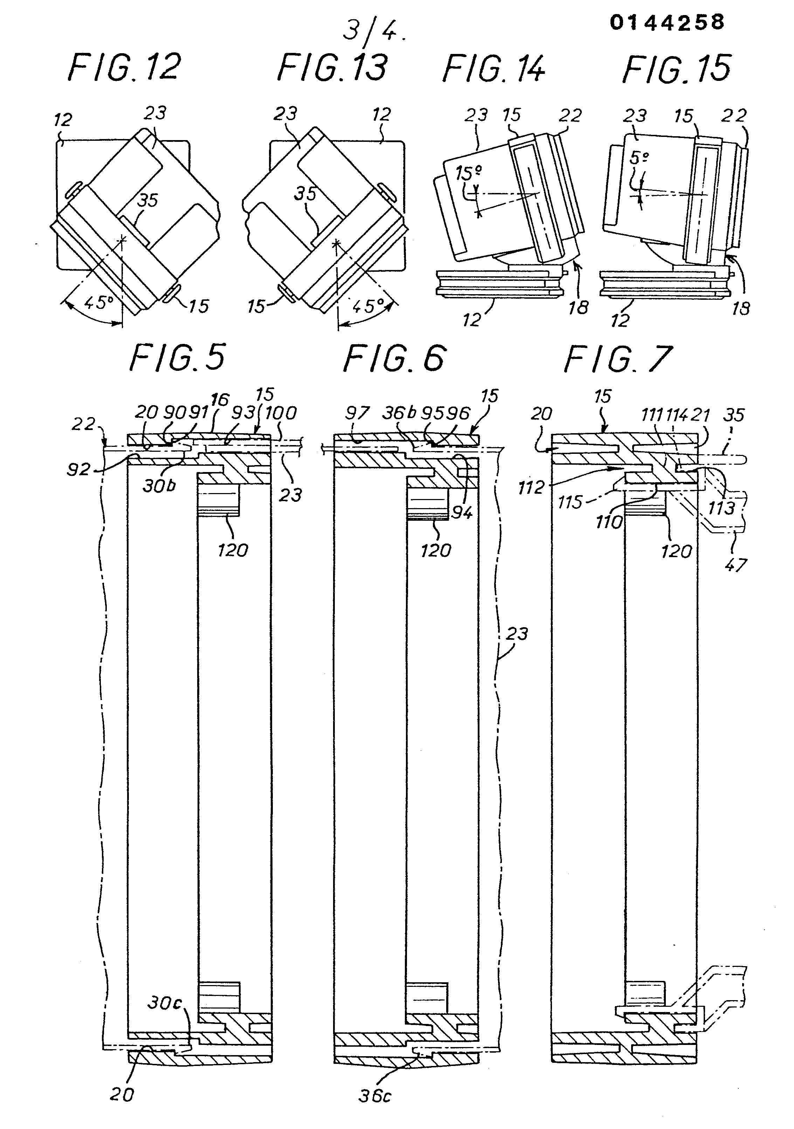

Le support 15, avec son cadre vertical 16 et le sabot 17, coopère avec la bonnette d'habillage 22 et le capot arrière 23 en sorte de constituer un capotage de protection adapté à recevoir le tube cathodique et ses accessoires. A des fins de clarté dans le dessin la figure 2 ne présente guère que quatre accessoires principaux. Ainsi un transformateur torique 44 repose sur les languettes de support 40, dans le sabot 17, sous la partie renflée du tube cathodique 10, en étant maintenu latéralement en position par les languettes de positionnement 42, tandis qu'un ventilateur 46, pour une éventuelle ventilation forcée des composés électroniques du tube cathodique est fixé en position par les plots 43. La figure 2 représente en outre un cadre 47 pour le montage, autour de la partie amincie du tube 10, de circuits imprimés ou autres composés. Sur la figure 2 est représenté en outre un collier 48 pour le tube. Les cadres de montage, tels que le cadre 47, sont, comme la bonnette 22 et le capot arrière 23, fixés directement au support 15 selon des modalités détaillées plus loin en regard de la figure 7.

Les connexions électriques du tube cathodique et de ses accessoires désignées par la référence 49, communiquent avantageusement avec le socle 12 au travers du transformateur torique 44 et de la lumière 41 du sabot 17.

Le sabot 17 coopère avec un réceptacle 50 du socle 12. Dans l'exemple représenté le socle 12 comprend essentiellement trois parties : une plaque inférieure de socle 51, une paroi ajourée 52 formée de plaques ajourées ou grilles, et une plaque supérieure de socle 53 dont fait partie le réceptacle 50. La plaque inférieure, à laquelle sont fixés les patins 13, comporte une série d'ajourages d'aération 54 à la faveur desquels sont avantageusement fixées des cartes imprimées de fonction telle que celle représentée sous la référence 55. Des colonnettes avec vis imperdables (non représentées) sont prévues pour l'assemblage des plaques inférieure et supérieure de socle. Ces dernières comportent en regard l'une de l'autre des rainures pour l'assemblage avec les grilles et plaques formant la paroi latérale 52, destinées notamment à la fixation de connecteurs, voyants et interrupteurs.

Selon une caractéristique particulièrement avantageuse de l'invention le sabot 17 et le réceptacle 50 constituent conjointement une articulation 18 entre le support 15 et le socle 12, qui sera dénommée ci-dessous rotule.

Telle que représentée en détail par les figures 2 à 4, la rotule 18 est formée par le sabot 17 et le réceptacle 50, lesquels sont traversés pour leur coopération par un ensemble d'articulation 60, en l'occurrence un ensemble vis-écrou.

Le sabot 17 présente une surface sphérique 17a destinée à coopérer avec une cavité sphérique 61 du réceptacle 50. Une rondelle en téflon 62 est avantageusement interposée entre eux. Ces éléments sont maintenus en configuration d'articulation par une vis creuse 63 à tête épaulée 64, traversant le sabot 17 à la faveur de la lumière oblongue 41 et la cavité sphérique 61 à la faveur d'une ouverture 65, et coopérant avec un écrou de retenue 66. La vis 63 est creuse en sorte de permettre le passage des connexions 49.

L'ouverture 65 de la cavité sphérique a le diamètre de la vis creuse 63 et présente en outre deux échancrures 67 diamétralement opposées à bords radiaux.

La vis creuse comporte sous sa tête 64 des méplats de guidage 69 parallèles dont l'écartement correspond à la largeur de la lumière oblongue 41 du sabot, d'où un blocage en rotation. La tête 64 de la vis creuse se raccorde par une zone annulaire 70 d'appui sur la face interne du sabot.

Les méplats de guidage 69, dont l'écartement correspond également, dans l'exemple représenté, au diamètre de la partie filetée de la vis creuse 63, sont ménagés dans une couronne 71 de la vis disposée sous la tête 64 de celle-ci. Cette couronne se prolonge axialement par deux ergots de limitation en rotation 72 adaptés à s'engager dans les échancrures 67 de la cavité sphérique du socle.

Tel qu'il vient d'être décrit l'ensemble vis-écrou 60 permet deux mouvements possibles pour la rotule 18. Un coulissement des méplats de guidage 69 dans la lumière oblongue 41 du sabot provoque une rotation relative entre le tube 10 et le socle 12 autour d'un axe horizontal. Tels que représentés aux figures 14 et 15 ces derniers présentent entre leurs positions extrêmes relatives un débattement total de 20°. Par ailleurs les ergots de limitation en rotation 72 et les échancrures 67 de l'ouverture 65 du socle 12 autorisent une rotation autour d'un axe vertical qui correspond, entre les positions extrêmes représentées à titre d'exemple aux figures 12 et 13, à un débattement global de 90°.

L'ensemble d'articulation 60 comporte avantageusement un organe de blocage-déblocage 75 avec, de préférence, un dispositif de réglage de dureté 80.

Il ressort de la figure 4 que le réceptacle 50 du socle 12 comporte une surface plane annulaire 76, ou flanc annulaire, bordant l'ouverture 65 du côté interne du socle 12. Cette surface annulaire présente une légère inclinaison par rapport à l' axe de la vis creuse 63.

Cette surface plane est affrontée axialement à une bague 77 entourant la vis creuse 63, comportant un flanc ou surface plane annulaire 77a également inclinée par rapport à l'horizontale. Cette bague 77, munie d'un levier de manoeuvre 78 traversant la paroi du socle à la faveur d'une lumière 79, constitue l'organe de blocage-déblocage.

La configuration de déblocage de la rotule correspond à la mise en coïncidence des surfaces annulaires 76 et 77a du réceptacle et de la bague : l'encombrement axial de la bague est alors minimal. Lorsque, par rotation de la bague 77, on sort les surfaces annulaires 76 et 77a de leur coïncidence la bague 77 a tendance, par effet de rampe, à s'écarter du réceptacle et à augmenter ainsi l'effort de retenue de l'écrou 66: il y a alors blocage de l'articulation. Pour ajuster la dureté de ce blocage on interpose entre l'organe de blocage-déblocage 75 et l'écrou de retenue 66 une rondelle de friction 80 élastique axialement, par exemple constituée par un noyau de néoprène enserré entre deux rondelles d'acier.

Les figures 5 à 11 précisent la structure du cadre 14 du support 15 décrit à titre d'exemple.

Il est à noter que ce support 15, auquel le tube cathodique 10, la majeure partie du capotage de protection ainsi que des cadres internes sont directement rapportés selon des modalités qui vont être décrites, est lui-même auto-porteur, par la poignée 35, dans la mesure où il permet, par la saisie de cette poignée, le transport de l'ensemble de la console.

Les figures 5, 6 et 7 illustrent respectivement la fixation de la bonnette d'habillage 22, celle du capot arrière 23, et celle d'un cadre de montage 47;

la figure 5 est une coupe verticale du cadre 16 au travers des pattes de fixation 30b et 30c de la bonnette 22. Ces pattes de fixation, flexibles, sont retenues par l'affrontement de leur face transversale 90 contre une portée de retenue 91 ménagée au fond de la rainure 20 de réception de la tranche de la bonnette. En vue de permettre la pénétration des pattes de fixation 30, la rainure 20 présente localement un élargissement 92 en direction de l'intérieur du cadre 16.

En regard des pattes de fixation 30, la rainure 21 de réception du capot arrière présente, elle aussi, un élargissement 93, vers l'extérieur, destiné à permettre l'introduction d'un outil 100, le long du capot 23, afin de déformer élastiquement et libérer les pattes de fixation 30.

La figure 6 est sensiblement symétrique de la figure 5 avec un élargissement 94 pour l'introduction des pattes de fixation 36 du capot, une portée de retenue 95 pour la face arrière 96 de ces pattes et des élargissements ou lucarnes 97 pour la libération des pattes.

La figure 7 montre que le cadre vertical 16 est doublé intérieurement par une bande interne 110 maintenue à distance de ce cadre par des ponts 111 en sorte de délimiter des rainures 112 et 113.

Les cadres de montage 47 présentent en leur extrémité une languette 114 adaptée à rentrer dans la rainure 113 ainsi qu'une griffe 115 adaptée à venir en prise, à l'opposé, près de la rainure 112.

La bande interne 110 du cadre vertical comporte des bossages 120 en ses coins, tandis que la paroi interne de la rainure 20 est supprimée en ces coins.

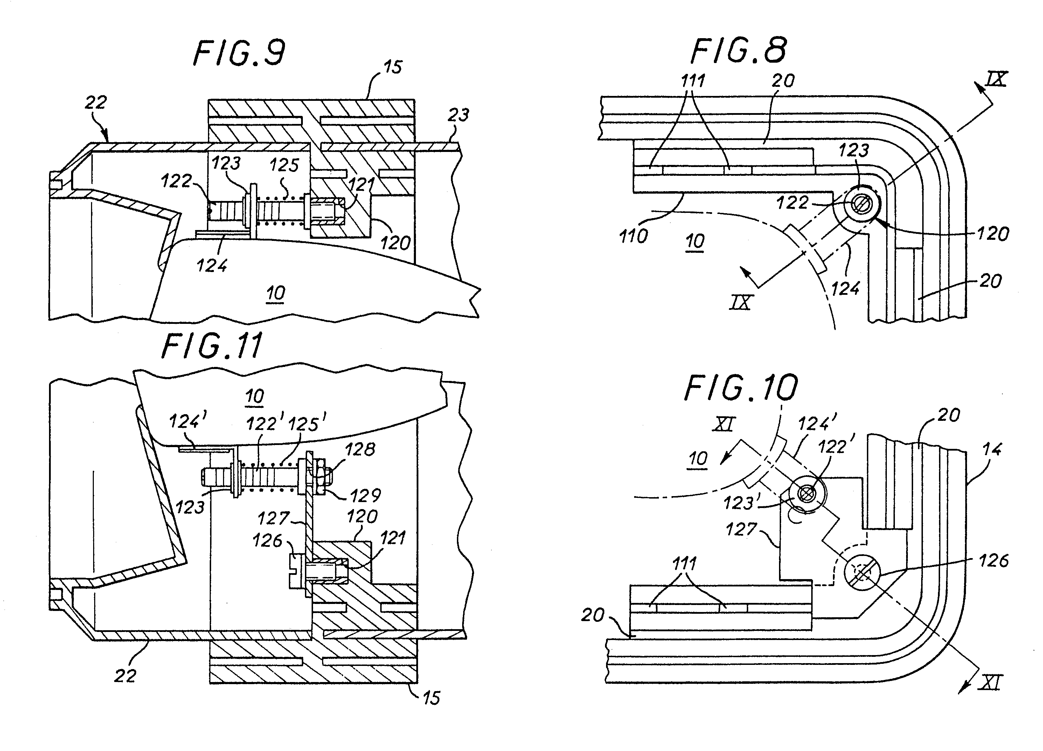

Ainsi qu'il apparaît aux figures 8 à 10 les bossages 120 sont destinés au montage du tube cathodique 10 par rapport au support 15.

Les figures 8 et 9 montrent que les bossages 120 comportent un alésage 121 dans lequel est fixée une broche 122 munie d'une bague d'arrêt 123. Entre cette dernière et le bossage 120 est engagée sur la broche une pièce 124 sensiblement en forme d'équerre, adaptée à appuyer radialement sur le tube 10 à la périphérie de sa partie renflée. Cette pièce en équerre est maintenue contre la bague d'arrêt 123 par un organe élastique 125, grâce à quoi, admettant un léger débattement en désaxement par rapport à la broche, elle exerce une pression répartie sur le tube.

Les figures 10 et 11 illustrent la fixation d'un tube de petite taille. L'alésage 121 reçoit dans ce cas une vis 126 adaptée à fixer une plaquette 127 présentant plus à l' intérieur de l'alésage 121 un perçage 128 pour la fixation par écrou 129 d'une broche 122' maintenant une pièce en équerre 124' emprisonnée entre une bague d'arrêt 123' et un organe élastique 125'.

Le support 15, la bonnette d'habillage 22, le capot arrière 23, le socle 12, les cadres de montage 49, la vis creuse 63 et l'organe de blocage-déblocage 75 sont obtenus de préférence par moulage de matière plastique, voire d'alliage de zinc ou d'aluminium pour les pièces les plus sollicitées.

Il va de soi que la description qui précède n'a été proposée qu'à titre explicatif nullement limitatif et que les nombreuses variantes peuvent être proposées par l'homme de l' art sans sortir du cadre de l'invention, notamment en ce qui concerne les moyens de limitation en rotation du support par rapport au socle. En variante, le support peut être suspendu à un bâti et peut être incliné par rapport à ce bâti. En variante simplifiée le support est fixe par rapport au socle. En variante, le socle peut avantageusement être aménagé pour le logement d' équipements accessoires divers, tel qu'un lecteur de disquette par exemple.

REVENDICATIONS

1- Console de visualisation, du genre comportant un capotage de protection pour la réception d'un tube cathodique et de ses accessoires, et un socle par rapport auquel ce capotage est monté par l'intermédiaire d'un élément de support, caractérisée en ce que cet élément de support comporte un cadre (15) adapté à ceinturer le tube cathodique (10) le long de sa partie renflée, ce cadre étant équipé de moyens de fixation (110, 120) pour le tube cathodique et de moyens (40, 43) pour porter des équipements (45, 46) de ce tube.

2- Console de visualisation selon la revendication 1, caractérisée en ce que l'élément de support (15) comporte une rainure (21) pour la fixation par clippage d'un capot arrière (23).

3- Console de visualisation selon la revendication 1 ou la revendication 2, caractérisée en ce que l'élément de support (15) comporte une rainure (20) pour la fixation par clippage d' une bonnette d'habillage.

4- Console de visualisation selon l'une quelconque des revendications 1 à 3, caractérisée en ce que l'élément de support (15) comporte une bande interne (110) pour la retenue par clippage d'au moins un cadre (47) de montage d'équipements accessoires.

5- Console de visualisation selon la revendication 2 ou la revendication 3, caractérisée en ce qu'elle comporte des lucarnes (93, 97) pour le passage d'un outil de déclippage (100).

6- Console de visualisation selon l'une quelconque des revendications 1 à 5, caractérisée en ce que l'élément de support (15) comporte des bossages (120) pour l'assujettissement d'organes (124, 124', 127) de maintien en position du tube cathodique (10).

7- Console de visualisation selon l'une quelconque des revendications 1 à 6, caractérisée en ce que l'élément de support (15) comporte un sabot (17) coopérant avec une cavité sphérique (61) du socle (12) avec laquelle elle forme rotule (18).

8- Console de visualisation selon la revendication 9, caractérisée en ce qu'un transformateur torique (44) est logé dans le sabot (17) de l'élément de support.

9- Console de visualisation selon la revendication 7 ou la revendication 8, caractérisée en ce que le sabot (17) et la cavité sphérique (61) sont maintenus en regard par un ensemble vis creuse (63) et écrou de retenue (66), la vis creuse permettant le passage de fils (49) de connexion électrique entre le socle (12) et le capotage de protection.

10- Console de visualisation selon la revendication 9, caractérisée en ce qu'elle comporte, mobile en rotation autour de l'ensemble vis-écrou, un organe de blocage-déblocage (75) affronté par une surface plane annulaire inclinée (77A) à une surface plane annulaire inclinée (76) de la face interne du socle (12).

11- Console de visualisation selon la revendication 9 ou la revendication 10, caractérisée en ce qu'une bague (80) élastique axialement formant organe de réglage de dureté de manoeuvre est associée à l'organe de blocage-déblocage.

12- Console de visualisation selon l'une quelconque des revendications 1 à 11, caractérisée en ce que l'élément de support (15) comporte une poignée (35).

FIG.1

FIG.2

FIG.4

1/4

0144258

FIG.3

## FIG.12

12 23
35
45° 15

## FIG.13

23 12
35
15 45°

## FIG.14

23 15 22
15°
12 18

## FIG.15

23 15 22
5°
12 18

## FIG.5

22
20 90 91 16 15 93 100
92
30b
120
23
30c
20

## FIG.6

97 36b 95 96 15
94
120
23
36c

## FIG.7

20 15 111 114 21 35
112
115
110
120
113
47

FIG.9

FIG.8

FIG.11

FIG.10

4/4

0144258

Office européen
des brevets

**RAPPORT DE RECHERCHE EUROPEENNE**

EP 84 40 2198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 111 357 (ELIPE et al.) * figures 1,2; page 1, lignes 58-114 * | 1,6 | G 06 F 1/00 |
| A | WO-A-8 202 467 (RUDIN) * figure; page 2, lignes 10-28 * | 1,4,6 | |
| A | FR-A-2 501 953 (MORAINE) * figures 1,4,5; page 3, lignes 5-14 * | 2,3 | |
| A | EP-A-0 070 336 (BRYANT-JEFFRIES et al.) * figures; page 4, ligne 1 - page 6, ligne 3 * | 7,10 | |
| A | EP-A-0 070 337 (BRADSHAW et al.) * figures; page 2, ligne 23 - page 7, ligne 4 * | 7,10 | DOMAINES TECHNIQUES RECHERCHES (Int. Cl.4) G 06 F 1/00 |
| A | DE-A-2 125 802 (HRDLICZKA) * revendication 2 * | 9 | |
| A | IBM TECHNICAL DISCLOSURE BULLETIN, vol. 23, no. 7A, décembre 1980, pages 2859-2860, New York, US; S. FUTATSUGI et al.: "Swivel and tilt mechanism for display unit" * en entier * | 7,11 | |

-----

Le présent rapport de recherche a été établi pour toutes les revendications

| Lieu de la recherche LA HAYE | Date d'achèvement de la recherche 01-02-1985 | Examinateur QUESSON C.J. |
|---|---|---|